Europäisches Patentamt

(19) European Patent Office

Office européen des brevets

(11) Numéro de publication: **0 004 249**
**B1**

(12) **FASCICULE DE BREVET EUROPEEN**

(45) Date de publication du fascicule du brevet:
14.07.82

(51) Int. Cl.³: **F 16 L 39/04, F 16 L 33/00**

(21) Numéro de dépôt: 79430005.3

(22) Date de dépôt: 08.03.79

(54) Dispositif d'accouplement de flexibles coaxiaux d'alimentation et de retour, aux machines et appareils hydrauliques.

(30) Priorité: 09.03.78 FR 7807383

(43) Date de publication de la demande:
19.09.79 Bulletin 79/19

(45) Mention de la délivrance du brevet:
14.07.82 Bulletin 82/28

(84) Etats contractants désignés:
CH DE GB IT NL SE

(56) Documents cités:
**FR-A-1 120 657**
**FR-A-2 367 422**
**US-A-1 665 655**
**US-A-3 986 732**
**Standard Handbook of fastening and joining, McGraw—Hill, 1977, P. 5—27 & 5—29, fig. 5.63**

(73) Titulaire: **ETABLISSEMENTS PELLENC ET MOTTE (Société à responsabilité limitée), Quartier Notre-Dame Route de Villelaure, F-84120 Pertuis (FR)**

(72) Inventeur: **Pellenc, Roger, Quartier Notre-Dame Route de Villelaure, F-84120 Pertuis (FR)**

(74) Mandataire: **Marek, Pierre, 28 & 32 rue de la Loge, F-13002 Marseille (FR)**

## Dispositif d'accouplement de flexibles coaxiaux d'alimentation et de retour, aux machines et appareils hydrauliques

L'invention concerne un dispositif d'accouplement de flexibles coaxiaux d'alimentation et de retour, aux machines et appareils hydrauliques fonctionnant par circulation de fluide sous pression. Selon des exemples d'applications très intéressants, ce dispositif permet d'assurer, commodément, rapidement et de manière fonctionnelle, la jonction démontable des extrémités de flexibles coaxiaux d'alimentation et de retour, d'une part avec un adaptateur lui-même relié à une source de fluide sous pression et, d'autre part, avec un outil à main tel qu'un sécateur ou une cisaille hydraulique, ou avec une machine-outil du genre marteau-piqueur ou autre appareil hydraulique de chantier. Ces exemples d'affectation ne sont cependant pas limitatifs, le dispositif de raccordement selon l'invention pouvant, plus généralement, être utilisé pour relier des flexibles coaxiaux, d'une part, à un adaptateur lui-même branché à des canalisations d'arrivée et de retour, et, d'autre part, à un appareil ou à une machine fonctionnant par circulation de fluide sous pression et comportant une entrée de fluide haute pression et une sortie de fluide basse pression.

Dans le Certificat d'Addition français FR-A N° 2.367.422, le Demandeur a décrit et revendiqué un sécateur hydraulique relié à une source de fluide hydraulique au moyen de tuyaux flexibles coaxiaux dont l'un (tuyau intérieur) amène le fluide hydraulique sous pression jusqu'audit sécateur, tandis que le second (tuyau extérieur) assure le retour dudit fluide jusqu'à ladite source. Selon cette réalisation, la partie postérieure du corps dans lequel est monté le dispositif de commande hydraulique de la lame mobile du sécateur est pourvue d'un évidement taraudé dans le fond duquel est réalisé un orifice axial se trouvant en relation constante avec l'entrée du distributeur hydraulique de l'appareil et dans lequel est logée l'extrémité libre du raccord solidaire du flexible intérieur, le raccord assujetti au flexible extérieur étant vissé dans ledit évidement taraudé et prenant appui, par son extrémité libre, contre un épaulement fixe ou démontable que présente ledit raccord intérieur qui se trouve maintenu en position par la pression exercée par ledit raccord extérieur vissé lequel communique, intérieurement, avec la sortie dudit distributeur hydraulique au moyen d'un passage exécuté dans ledit corps.

Un tel agencement a amélioré très sensiblement la construction, la manipulation et le fonctionnement des sécateurs hydrauliques. Cependant, il est apparu que l'assujettissement fixe, par vissage, des embouts des flexibles coaxiaux d'alimentation et de retour n'interdit pas la torsion de ces derniers, lors des manipulations des outils; cette torsion pouvant contrarier la bonne circulation du fluide, favoriser la détérioration desdits flexibles ou provoquer le dévissage de leurs embouts de jonction.

Il est également connu (US-A 3.986.732) d'accoupler des flexibles coaxiaux d'alimentation et de retour à des appareils de distribution d'un fluide sous de faibles pressions tels que distributeurs de pompes à essence, avec une aptitude de rotation par rapport à ces appareils, au moyen d'un dispositif comprenant un embout constitué par des raccords coaxiaux assujettis, respectivement, à l'extrémité du flexible intérieur d'alimentation et à l'extrémité du flexible extérieur de retour, le raccord intérieur étant logé dans l'alésage d'un corps évidé apte à être connecté auxdits appareil, et calé contre une face de ce corps par l'intermédiaire d'un circlips porté par son extrémité libre, tandis que le raccord extérieur est engagé dans une portion de diamètre plus important dudit alésage dans laquelle débouche un passage de retour, ledit raccord extérieur étant assujetti audit corps au moyen d'un collier taraudé.

Outre le fait qu'un tel dispositif est relativement complexe et qu'il n'autorise pas un accouplement et un désaccouplement rapides et commodes des flexibles coaxiaux et des appareils, il présente l'inconvénient de ne pas permettre un accouplement rotatif desdits flexibles et desdits appareils lorsque ces derniers utilisent un fluide soumis à des pressions élevées. Dans ce cas, en effet, la pression du fluide exerce une force axiale très importante sur la face avant du raccord intérieur et sur le circlips de retenue lequel se trouve ainsi énergiquement calé contre le corps, de sorte que ledit raccord intérieur ne peut tourner par rapport audit corps et au flexible extérieur.

Dans ces conditions, la résistance à la rotation étant supérieure à la capacité de déformation du flexible intérieur, ce dernier se trouverait immaquablement soumis à des torsions nuisibles lors des manipulations des appareils; torsions génératrices d'un mauvais fonctionnement et d'un détérioration rapide des flexibles.

Un objet de la présente invention est donc de remédier aux inconvénients des systèmes connus d'accouplement de flexibles coaxiaux à des appareils ou machines utilisant un fluide sous pression, au moyen d'un dispositif simple et efficace.

Le dispositif d'accouplement auquel se rapporte l'invention comprend: — un corps comportant un alésage pour le passage de fluide à basse pression et dans le fond duquel est ménagé un perçage coaxial pour le passage du fluide à haute pression; — un embout constitué par des raccords coaxiaux assujettis, respectivement, à l'extrémité du flexible intérieur d'acheminement du fluide à haute pression et à l'extrémité du flexible extérieur d'acheminement du fluide à basse pression, lesdits raccords coaxiaux étant agencés de façon à pouvoir être montés avec une aptitude de rotation dans ledit perçage et dans ledit alésage, respectivement, et également-

ment avec une aptitude de rotation l'un par rapport à l'autre; — et une butée démontable destinée à assurer la permanence de l'accouplement rotatif.

Selon l'invention, ce dispositif est remarquable par le fait que le raccord intérieur assujetti au flexible intérieur est calé contre l'extrémité libre du raccord extérieur assujetti au flexible extérieur et monté avec une latitude de mouvement révolutif relatif par rapport au corps, au moyen d'un circlips porté par ledit raccord intérieur.

Un avantage découlant du dispositif d'accouplement suivant l'invention est que les flexibles coaxiaux peuvent être branchés aisément et promtement aux appareils ou machines utilisant le fluide sous pression et, éventuellement, aux adaptateurs reliés à la source de fluide hydraulique, et désaccouplés tout aussi rapidement et commodément desdits appareils ou adaptateurs.

Un autre avantage résultant de la mise en oeuvre du dispositif d'accouplement suivant l'invention réside dans le fait qu'il autorise une rotation facile des flexibles ou des appareils accoulés, en cours de fonctionnement, quelle que soit la pression du fluide acheminé par le flexible intérieur, y compris, par conséquent, lorsque cette pression est élevée.

Ces buts et caractésistiques et d'autres encore, ressortiront mieux de la description qui suit et du dessin annexé dans lequel:

La figure 1 est une vue en coupe axiale, montrant les principaux organes du dispositif de raccordement selon l'invention, avant leur accouplement.

La figure 2 est une vue en coupe axiale illustrant le dispositif en position de jonction.

La figure 3 est une vue en coupe transversale suivant la ligne 3-3 de la figure 2.

La figure 4 est une coupe axiale d'une variante de réalisation du dispositif de raccordement.

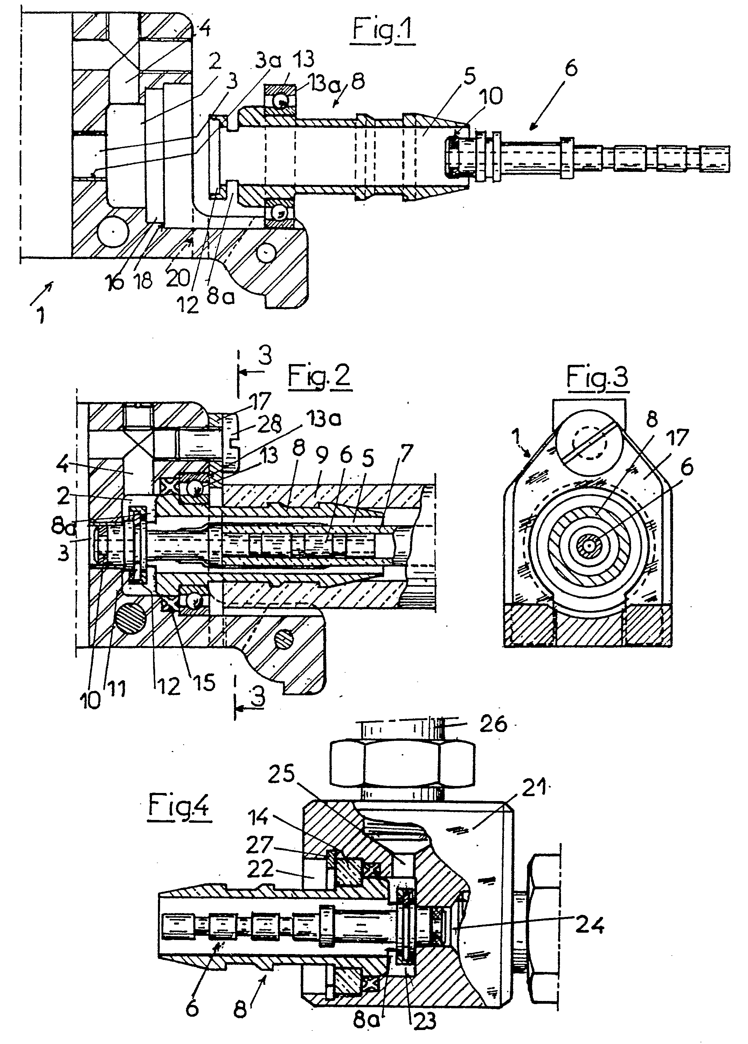

On se réfère audit dessin pour décrire des modes d'exécution des moyens de jonction selon la présente invention qui, dans ces exemples, sont destinés au raccordement des extrémités de flexibles coaxiaux, d'une part, avec la partie postérieure du corps d'un outil à main tel qu'un sécateur hydraulique (figures 1 à 3) et, d'autre part, avec un appareil d'adaptation (figure 4) lui-même branché à la sortie et au retour d'une source de fluide hydraulique. Un tel adaptateur est, par exemple, branché au circuit hydraulique d'un tracteur agricole ou à un groupe hydraulique mobile comprenant principalement une pompe et un réservoir d'huile.

Cependant, comme indiqué précédemment, ces exemples ne sont pas limitatifs, le dispositif selon l'invention convenant en effet à la jonction démontable des flexibles coaxiaux d'alimentation et de retour de tout appareil ou machine de chantier à fonctionnement hydraulique nécessitant une arrivée d'huile à haute pression et un retour d'huile à basse pression.

Ce dispositif comprend principalement: un logement aménagé dans le corps de l'appareil ou machine, un embout tournant solidaire de l'extrémité considérée des flexibles coaxiaux et une butée démontable destinée à assurer le maintien dudit embout et dudit corps en position d'accouplement.

Il est notamment remarquable en ce qu'il comprend un embout constitué de deux raccords coaxiaux assemblés, respectivement, aux extrémités du flexible intérieur dans lequel circule l'huile sous pression et du flexible extérieur de retour de l'huile à basse pression, lesdits raccords étant indépendants et montés avec une liberté de rotation, d'une part, l'un par rapport à l'autre, et, d'autre part, par rapport aux logements du corps de l'appareil hydraulique dans lesquels ils sont montés.

Le logement aménagé dans le corps 1 de l'appareil est constitué par un alésage 2 formé dans ledit corps et dans le fond duquel est prévu, coaxialement, un perçage cylindrique 3 équipé d'une douille 3a et communiquant avec l'entrée du distributeur hydraulique (non représenté) commandant le fonctionnement dudit appareil. D'autre part, un passage 4 réalisé dans le corps 1 établit une communication permanente entre la sortie du distributeur hydraulique et l'alésage 2 à proximité du fond duquel il débouche.

L'embout tournant équipant chaque extrémité des flexibles coaxiaux comprend deux raccords coaxiaux indépendants entre lesquels est ménagé un espace annulaire 5, soit un raccord intérieur 6 solidaire de l'extrémité du flexible interne 7 amenant le fluide sous pression, et un raccord extérieur 8 assujetti à l'extrémité du flexible externe 9 assurant le retour dudit fluide à basse pression.

Les raccords et notamment le raccord intérieur, peuvent être fixés à demeure par sertissage aux extrémités des flexibles coaxiaux, ou l'on peut équiper ces extrémités d'un raccord récupérable de construction connue en soi.

Un joint annulaire d'étanchéité et de frottement 10 est monté sur la périphérie de l'extrémité libre du raccord intérieur destinée à être introduite dans le perçage cylindrique 3.

L'extrémité libre du raccord extérieur comporte, intérieurement, une dépression circulaire 12 destinée au logement du circlips d'appui 11 monté sur le raccord intérieur, et contre lequel vient en contact le fond plat de ladite dépression dans la position d'accouplement de l'embout. De la sorte, le circlips se trouvant en appui sur une surface plane peut glisser sur cette dernière sans risque d'être éjecté hors de son logement ou brisé, lorsque les raccords sont animés d'un mouvement de rotation relatif.

Le raccord extérieur 8 est pourvu de fentes ou lumières radiales 8a en arrière de la dépression circulaire 12, ces fentes ou lumières établissant une communication permanente entre le passage 4 de retour de l'huile et l'intérieur dudit raccard.

Un organe de frottement est monté sur le raccord extérieur et se trouve disposé entre ledit raccord extérieur et la paroi latérale de l'alésage 2, lorsque l'embout est assemblé au corps de l'appareil. Lorsque l'embout tournant est destiné à être accouplé à un appareil d'utilisation tel qu'un sécateur ou autre (figures 1 et 2), l'organe de frottement est, de préférence, constitué par un roulement 13. En effet, lors du travail, l'outil peut être tourné et retourné de nombreuses fois dans les deux sens et il est donc conseillé d'utiliser un moyen d'accouplement tournant offrant la plus grande souplesse possible.

Cette exigence est moins impérative lorsque l'embout tournant est destiné à être raccordé à un adaptateur (figure 4), ce dernier étant en principe porté fixement par le machine (par exemple, tracteur ou groupe hydraulique) fournissant le fluide sous pression, de sorte que les mouvements relatifs de rotation entre ledit embout et ledit adaptateur sont beaucoup moins nombreux. Dans ce cas, l'organe de frottement peut être simplement constitué par un coussinet ou une bague de bronze 14.

Lors de l'accouplement, l'extrémité libre équipé du joint 10 du raccord intérieur 6 est logée dans le perçage 3, après qu'on ait placé un joint 15 tel qu'un joint »4 lobes« dans une échancrure circulaire 16 ménagée dans l'alésage 2, en aval de la sortie du passage 4.

On introduit ensuite le raccord extérieur portant le roulement 13 dans ledit alésage, de manière que le fond de sa dépression circulaire 12 vienne en butée contre le circlips 11, tandis que ledit roulement prend appui contre le joint 15.

L'embout tournant et le corps de l'appareil sont assemblés au moyen d'une butée empêchant le retrait dudit embout hors de son logement tout en autorisant sa rotation.

La liaison des embouts tournants et des outils ou appareils à fonctionnement hydraulique est, par exemple, avantageusement obtenue au moyen d'un étrier 17 se fixant, au moyen d'une vis 28, sur le corps 1 et prenant appui contre la face postérieure de la bague extérieure 13a du roulement 13 porté par le raccord extérieur, la face antérieure de ladite bague se trouvant en appui contre un épaulement circulaire 18 que présente l'alésage 2.

Pour éviter que la manipulation des appareils ou la pression de l'huile s'exerçant sur la face avant du raccord intérieur n'engendrent des efforts provoquant un pliage de l'étrier 17 autour de son point de fixation, les extrémitées libres des branches dudit étrier sont logées dans des rainures parallèles 20 que présente le corps 1.

On comprend que ce dispositif permet un accouplement et un désaccouplement commodes et rapides des flexibles coaxiaux et des outils, appareils ou machines. Il autorise une séparation tout aussi prompte et aisée des flexibles, par exemple pour procéder au remplacement de l'un d'eux en cas de nécessité.

Il suffit, en effet, de retirer le circlips d'appui il de l'un des raccords intérieurs, pour extraire le tuyau intérieur en le tirant par son extrémité opposée.

Les dispositifs d'accouplement des extrémités opposées des flexibles coaxiaux avec d'une part, les outils, appareils ou machines utilisateurs et, d'autre part, l'adaptateur, peuvent être identiques, le corps 21 dudit adaptateur étant, en effet, agencé de manière sensiblement analoque au corps 1 desdits appareils.

Dans le corps 21, est ménagé un alésage 22 dans le fond duquel est prévu un orifice cylindrique coaxial 23 communiquant avec la canalisation d'arrivée d'huile sous pression 24, tandis qu'un perçage transversal 25 met en communication ledit alésage et une canalisation de retour 26.

Compte tenu du fait que l'embout tournant raccordé à l'adaptateur est moins fréquemment désaccouplé, la butée démontable assurant la permanence de l'accouplement peut être constituée par un circlips 27 logé dans une gorge circulaire prévue à proximité de l'entrée de l'alésage 22.

## Revendications

1. Dispositif d'accouplement de flexibles coaxiaux d'alimentation et de retour aux appareils ou machines fonctionnant par circulation de fluide sous pression, tels que, par exemple, sécateurs et appareils hydrauliques de chantier, ledit dispositif comprenant:

— un corps (1) comportant un alésage (2) pour le passage du fluide à basse pression et dans le fond duquel est ménagé un perçage coaxial (3), pour le passage du fluide à haute pression;
— un empout constitué par des raccords coaxiaux (6, 8) assujettis, respectivement, à l'extrémité du flexible intérieur (7) d'acheminement du fluide à haute pression et à l'extrémité du flexible extérieur (9) d'acheminement du fluide à basse pression, lesdits raccords coaxiaux (6, 8) étant agencés de façon à pouvoir être montés avec une aptitude de rotation dans ledit perçage (3) et dans ledit alésage (2), respectivement, et également avec une aptitude de rotation l'un par rapport à l'autre;
— et une butée démontable (17) destinée à assurer la permanence de l'accouplement rotatif, caractérisé en ce que le raccord intérieur (6) assujetti au flexible intérieur (7) est calé l'extrémité libre du raccord extérieur (8) assujetti au flexible extérieur (9) et monté avec une latitude de mouvement révolutif relatif par rapport audit corps (1), au moyen d'un circlips (11) porté par ledit raccord intérieur.

2. Dispositif d'accouplement de flexibles coaxiaux selon la revendication 1, caractérisé en ce que l'extrémité libre du raccord extérieur (8) assujetti au flexible extérieur (9) comporte, intérieurement, une dépression circulaire (12) pour le logement et l'appui du circlips (11) monté sur le raccord intérieur (6) fixé au flexible intérieur (7).

3. Dispositif d'accouplement de flexibles coaxiaux selon la revendication 2, caractérisé en ce que le fond de la dépression circulaire (12) a une surface plane.

4. Dispositif d'accouplement de flexibles coaxiaux selon la revendication 2, caractérisé en ce que le raccord extérieur (8) est pourvu de fentes ou lumières latérales (8a) en arrière de ladite dépression.

5. Dispositif d'accouplement de flexibles coaxiaux suivant l'une des revendications 1 ou 2, caractérisé en ce que ledit embout (6, 8) est positionné dans le corps (1) au moyen d'un organe de frottement tel qu'un roulement (13) ou un coussinet (14) porté par le raccord extérieur (8) et prenant appui, par sa face postérieure, contre ladite butée démontable (17).

6. Dispositif d'accouplement de flexibles coaxiaux selon la revendication 5, caractérisé en ce que la butée démontable (17) est constituée par un étrier se fixant, par vissage sur le corps (1), et dont les extrémités libres des branches se logent dans des rainures parallèles (20) que présente ledit corps.

7. Dispositif d'accouplement de flexibles coaxiaux selon l'une des revendications 5 ou 6, caractérisé en ce que la butée démontable (17) prend appui contre la face postérieure de la bague extérieure (13a) du roulement (13).

**Patentansprüche**

1. Einrichtung für die Verbindung von koaxialen Zu- und Rückfuhrschläuchen mit Geräten oder Maschinen, die mit einem Druckmittelkreislauf arbeiten, wie z. B. Schneidemaschinen und hydraulische Werkstattmaschinen, wobei die Einrichtung aus folgenden Teilen besteht:

— einen Körper (1), der eine für den Durchfluß der Niederdruckflüssigkeit vorgesehene Bohrung (2) aufweist, wobei am Ende der Bohrung eine koaxiale Bohrung (3) für den Durchfluß der Hochdruckflüssigkeit vorgesehen ist;
— ein aus gleichachsigen Verbindern (6, 8) bestehendes Anpassungsstück, wobei die Verbinder mit dem Ende des inneren (7) Hoch- bzw. äußeren (8) Niederdruckschlauches verbunden sind und wobei die koaxialen Verbinder (6, 8) so hergestellt sind, daß sie drehbar jeweils in die Bohrungen (3 bzw. 2) eingeführt werden können und gegeneinander verdrehbar sind;
— und einen abmontierbaren Verschluß (17), der die drehbare Verbindung aufrechterhält, dadurch gekennzeichnet, daß der innere, dem inneren Schlauch (7) zugeordnete Verbinder (6) am freien Ende des dem Außenschlauch (9) zugeordneten Außenverbinders (8) relativ zum Körper (1) mittels eines Sicherungsrings (11), der von dem inneren Verbinder getragen wird, drehbar festgelegt ist.

2. Einrichtung für die Verbindung von koaxialen Zu- und Rückfuhrschläuchen nach Anspruch 1, dadurch gekennzeichnet, daß das freie, dem Außenschlauch (9) zugeordnete Ende des äußeren Verbinders (8) innen eine kreisförmige Ausnehmung (12) zur Aufnahme und Abstützung des Sicherungsringes (11) aufweist, der am mit dem Innenschlauch (7) verbundenen Innenverbinder (6) montiert ist.

3. Einrichtung für die Verbindung von koaxialen Zu- und Rückfuhrschläuchen gemäß Anspruch 2, dadurch gekennzeichnet, daß der Boden der kreisförmigen Ausnehmung (12) eine ebene Oberfläche aufweist.

4. Einrichtung für die Verbindung von koaxialen Zu- und Rückfuhrschläuchen nach Anspruch 2, dadurch gekennzeichnet, daß der Außenverbinder (8) hinter der genannten Ausnehmung mit Spalten oder Seitenöffnungen (8a) versehen ist.

5. Einrichtung für die Verbindung von koaxialen Zu- und Rückfuhrschläuchen nach einem der Ansprüche 1 oder 2, dadurch gekennzeichnet, daß das Anpassungsstück (6, 8) innerhalb des Körpers (1) mittels eines Reibungsgliedes wie z. B. eines Wälzlagers (13) oder einer Buchse (14) gehaltert ist, das bzw. die am Außenverbinder (8) abgestützt ist und mit ihrer hinteren Oberfläche an dem abnehmbaren Verschluß (17) aufliegt.

6. Einrichtung für die Verbindung von koaxialen Zu- und Rückfuhrschläuchen nach Anspruch 5, dadurch gekennzeichnet, daß der abnehmbare Verschluß (17) als Bügel ausgebildet ist, der am Körper (1) durch Schraubung befestigbar ist und dessen Schenkelenden sich in parallelen Nuten (20) des Körpers lagern.

7. Einrichtung für die Verbindung von koaxialen Zu- und Rückfuhrschläuchen nach einem der Ansprüche 5 oder 6, dadurch gekennzeichnet, daß der abnehmbare Verschluß (17) sich gegen die hintere Oberfläche des Außenringes (13a) des Wälzlagers (13) abstützt.

**Claims**

1. Device for coupling coaxial feed and return hoses to apparatus or machines operating by circulation of fluid under pressure, such as, for example, secateurs and hydraulic workshop apparatus, the said device compising:

— a body (1) comprising a bore (2) for the passage of fluid at low pressure and in the base of which is formed a coaxial bore (3) for the passage of fluid under high pressure;
— a ferrule constituted by coaxial couplings (6, 8) secured respectively at the end of the internal hose (7) for feeding of fluid at high pressure and at the end of the external hose (9) for the feeding of fluid at low pressure, the said coaxial couplings (6, 8) being constructed in such a manner as to be able to be engaged with an ability to rotate in the said bore (3) and in the said bore (2) respectively, and likewise with the ability to rotate one with respect to the other;

— and a removable stop (17) serving to ensure the permanence of the rotary coupling, characterised in that the internal coupling (6) secured to the internal hose (7) is butted against the free end of the external coupling (8) secured to the external hose (9) and is mounted with a latitude of relative rotary movement with respect to the said body (1), by means of a circlip (11) carried by the said internal coupling.

2. Device for coupling coaxial hoses according to claim 1 characterised in that the free end of the external coupling (8) secured to the external hose (9) comprises, internally, a circular depression (12) for housing and for abutting by the circlip (11) mounted on the internal coupling (6) secured to the internal hose (7).

3. Device for coupling coaxial hoses according to claim 2 characterised in that the base of the circular depression (12) has a plane surface.

4. Device for coupling coaxial hoses according to claim 2 characterised in that the external coupling (8) is provided with lateral openings or windows (8a) to the rear of the said depression.

5. Device for coupling coaxial hoses according to one of claims 1 or 2 characterised in that the said ferrule (6, 8) is positioned in the body (1) by means of a frictional element such as a ball race (13) or a bearing bush (14) carried by the external coupling (8) and bearing, by its rear face, against the said removable stop (17).

6. Device for coupling coaxial hoses according to claim 5 characterised in that the removable stop (17) is constituted by a strap fixed by screwing onto the body (1) and the free ends of the arms of which seat into parallel grooves (20) of the said body.

7. Device for coupling coaxial hoses according to one of claims 5 or 6 characterised in that the removable stop (17) bears against the rear face of the external ring (13a) of the ball race (13).

Fig.1

Fig.2

Fig.3

Fig.4